# EUROPÄISCHE PATENTSCHRIFT

(11) **EP 1 437 542 B1**
(45) Veröffentlichungstag und Bekanntmachung des Hinweises auf die Patenterteilung: **27.09.2006**
(21) Anmeldenummer: 03000380.0
(22) Anmeldetag: 10.01.2003
(51) Int. Cl.: F16P 3/14, G01V 8/20

(54) **Lichtgitter und Verfahren zu dessen Justierung**
Light barrier and method for its adjustment
Barrière optique et son procédé de réglage

(43) Veröffentlichungstag der Anmeldung: 14.07.2004
(73) Patentinhaber: Leuze lumiflex GmbH + Co. KG, 82256 Fürstenfeldbruck (DE)
(72) Erfinder: Lohmann, Lutz, Dr., 82140 Olching (DE); Rohbeck, Volker, 85244 Röhrmoos (DE); Lehner, Werner, 82194 Gröbenzell (DE)
(74) Vertreter: Ruckh, Rainer Gerhard

(56) Entgegenhaltungen:
- EP-A- 0 598 630
- EP-A- 0 964 272
- EP-A- 1 233 283
- EP-B- 0 889 332
- FR-A- 2 733 849
- US-A- 3 944 818

## Beschreibung

Die Erfindung betrifft ein Lichtgitter gemäß dem Oberbegriff des Anspruchs 1.

Ein derartiges Lichtgitter ist aus der DE 195 10 304 C1 bekannt. Das Lichtgitter weist zur Überwachung eines flächigen Überwachungsbereichs eine Sendereinheit und eine Empfängereinheit auf, die an gegenüberliegenden Rändern des Überwachungsbereichs angeordnet sind. Die Sendereinheit weist eine Anordnung von nebeneinander liegend angeordneten, Sendelichtstrahlen emittierenden Sendern auf. Entsprechend weist die Empfängereinheit eine Anordnung von nebeneinander liegend angeordneten Empfängern auf. Bei freiem Strahlengang werden die Empfänger mit den von den Sendern emittierten Sendelichtstrahlen beaufschlagt. Befindet sich ein Objekt im Strahlengang, so wird der Strahlengang der Sendelichtstrahlen wenigstens eines Senders unterbrochen, so dass diese nicht mehr auf den zugeordneten Empfänger oder die zugeordneten Empfänger auftreffen, wodurch als Objektmeldung ein Objektfeststellungssignal generiert wird.

Derartige Lichtgitter werden insbesondere im Bereich des Personenschutzes eingesetzt. Beispielsweise werden die Lichtgitter zur Überwachung von sicherheitskritischen Bereichen an Anlagen und Maschinen wie zum Beispiel Werkzeugmaschinen, Pressen oder dergleichen, eingesetzt.

Bei einem Eingriff in den vom Lichtgitter überwachten Überwachungsbereich wird durch die im Lichtgitter generierte Objektmeldung die Werkzeugmaschine außer Betrieb gesetzt, so dass für eine im Bereich der Werkzeugmaschine arbeitende Person die Gefahr von Verletzungen ausgeschlossen ist.

Um eine sichere Funktion des Lichtgitters zu gewährleisten muss dieses vor Inbetriebnahme justiert werden, so dass die von den Sendern emittierten Sendelichtstrahlen auf die zugeordneten Empfänger treffen. Problematisch hierbei ist, dass die Sender typischerweise Sendelichtstrahlen im Infrarotbereich emittieren, welche für das menschliche Auge nicht sichtbar sind. Damit kann deren Strahlenverlauf nur mittels spezieller Sichtgeräte verfolgt werden, wobei dies für eine Ausrichtung der Strahlachsen nur eingeschränkt tauglich ist.

Aus der EP 0 889 332 B1 ist ein Lichtgitter bekannt geworden, bei welchem zur Ausrichtung der Sendereinheit und der Empfängereinheit eines Lichtgitters zwei gegenläufige Richtstrahlen des sichtbaren Spektralbereiches eingesetzt werden, die von einem oder zwei Sendeelementen emittiert werden. Im ersten Fall ist ein Sendeelement in der Sendereinheit ortsfest angeordnet. Die von diesem Sendeelement emittierten sichtbaren Richtstrahlen werden entlang einer ersten Strahlachse zur Empfängereinheit geführt und derart abgelenkt, dass diese entlang einer zweiten Strahlachse zur Sendereinheit zurücklaufen. Die zurücklaufenden Richtstrahlen werden zur Justierung des Lichtgitters bezüglich eines Referenzpunktes an der Sendereinheit ausgerichtet. Im zweiten Fall ist sowohl in der Sendereinheit als auch in der Empfängereinheit ein Sendeelement integriert. Die Sendeelemente generieren im Abstand zueinander verlaufende gegenläufige Richtstrahlen, die an Referenzpunkten an der Sendereinheit und an der Empfängereinheit ausgerichtet werden.

Nachteilig bei diesem Verfahren ist, dass zur Justierung des Lichtgitters sowohl die Senderleiste als auch die Empfängerleiste anhand der Richtstrahlen ausgerichtet werden müssen. Insbesondere bei Lichtgittem deren Sender- und Empfängereinheit in größerem Abstand zueinander angeordnet sind, erfordert eine derartige Ausrichtung einen unerwünscht hohen Aufwand. Besonders nachteilig hierbei ist, dass zunächst die Empfängereinheit auf einen ersten von der Sendereinheit aus emittierten Richtstrahl ausgerichtet werden muss und danach wiederum die Sendereinheit so justiert werden muss, dass der rückläufige Richtstrahl auf den Referenzpunkt auf der Sendereinheit trifft. Dies erfordert ein mehrmaliges einzelnes Ausrichten der Sender- und Empfängereinheit. Ein derartiges Ausrichten ist äußerst umständlich und zeitaufwendig. Insbesondere bei großen Abständen zwischen der Sender- und Empfängereinheit ist für das Bedienpersonal ein unerwünscht hoher Aufwand erforderlich, sowohl die Sendereinheit als auch die Empfängereinheit ausrichten zu müssen.

Aus der EP 0 598 630 A1 ist ein Lichtgitter bekannt, welches eine Sendereinheit mit einer Reihenanordnung von Sendern und eine Empfängereinheit mit einer Reihenanordnung von Empfängern aufweist. Die Sendereinheit und die Empfängereinheit sind an gegenüberliegenden Rändern eines Überwachungsbereichs angeordnet. Die Sender emittieren unsichtbare Sendelichtstrahlen im Infrarotbereich, welche innerhalb des Überwachungsbereichs verlaufen und auf einen Empfänger treffen, wenn kein Objekt im Überwachungsbereich angeordnet ist, welches den Strahlengang der jeweiligen Sendelichtstrahlen unterbricht. Zur Kontrolle der korrekten Ausrichtung sind an den Empfängern als Signalgeber Leuchtdioden vorgesehen, die leuchten, wenn die von den Sendern emittierten Sendelichtstrahlen auf die jeweiligen Empfänger treffen.

Der Erfindung liegt die Aufgabe zugrunde ein Lichtgitter der eingangs genannten Art bereitzustellen, welches auf einfache Weise schnell und präzise justierbar ist.

Zur Lösung dieser Aufgabe sind die Merkmale der Ansprüche 1 und 10 vorgesehen. Vorteilhafte Ausführungsformen und zweckmäßige Weiterbildungen der Erfindung sind in den Unteransprüchen beschrieben.

Das erfindungsgemäße Lichtgitter weist eine eine vorgegebene Anzahl von Sendelichtstrahlen emittierenden Sendern aufweisende Sendereinheit und eine eine vorgegebene Anzahl von Empfängern aufweisende Empfängereinheit auf. Die Sender und Empfänger bilden jeweils Strahlachsen definierende Paare, wobei bei freiem Strahlengang die von einem Sender emittierten Sendelichtstrahlen auf den zugeordneten Empfänger treffen, und wobei bei einer durch einen Objekteingriff bedingten Unterbrechung wenigstens einer Strahlachse ein Objektfeststellungssignal generierbar ist. Zur Justierung der Strahlachsen der Sendereinheit sind in vorgegebenen Sollpositionen relativ zu den Sendern wenigstens zwei sichtbare Richtstrahlen emittierende Sendeelemente vorgesehen, welche jeweils auf eine Zielmarke an der Empfängereinheit ausrichtbar sind.

Der Grundgedanke der Erfindung besteht darin, dass mit den in der Sendereinheit integrierten, sichtbaren Richtstrahlen emittierenden Sendeelementen ein Vorwärtsabgleich von nachgeordneten Objekteinheiten ermöglicht wird.

Im einfachsten Fall liegt dabei der Sendereinheit als einzige Optikeinheit die Empfängereinheit gegenüber. Die Justierung des Lichtgitters erfolgt dabei allein durch eine Positionsverstellung der Empfängereinheit. Demgegenüber bleibt die Sendereinheit, in welcher die Richtstrahlen generiert werden, als Bezugsgröße des Justiervorganges in ihrer Position unverändert.

Die Positionsverstellung der Empfängereinheit erfolgt dabei derart, dass die Richtstrahlen jeweils auf eine Zielmarke an der Empfängereinheit ausgerichtet werden. Bei einer derart ausgerichteten Empfängereinheit kann vorteilhaft in einem weiteren Verfahrensschritt die Empfängereinheit um ihre Längsachse gedreht werden, so dass die optischen Achsen der Empfänger der Empfängereinheit auf die optischen Achsen der Sender der Sendereinheit optimal ausgerichtet werden.

Hierzu werden in einer vorteilhaften Ausführungsform nicht die Richtstrahlen, sondern von Sendern emittierte Sendelichtstrahlen verwendet. Die Sendelichtstrahlen liegen typischerweise im Infrarotbereich und sind für das menschliche Auge unsichtbar. Zur Kontrolle der Qualität der Ausrichtung ist daher wenigstens eine Anzeigeeinheit vorgesehen, mittels derer die Lichtmenge anzeigbar ist, die auf wenigstens einen der Empfänger auftrifft.

Da diese Anzeigeeinheit an der Empfängereinheit angeordnet ist, kann auch dieser Justiervorgang im Rahmen des Vorwärtsabgleichs erfolgen, d. h. die Einstellung erfolgt allein durch Drehen der Empfängereinheit bei unveränderter Position der Sendereinheit.

In einer zweckmäßigen Ausgestaltung ist an der Empfängereinheit nur eine Anzeigeeinheit vorgesehen. Da die Empfänger in der Empfängereinheit ortsfest angeordnet sind, ist die Bewertung der auf einen einzigen Empfänger auftreffenden Lichtmenge ausreichend um die Drehposition der Empfänger der Empfängereinheit zu ermitteln.

Zweckmäßigerweise wird hierzu der Empfänger verwendet, der die geringste Lichtmenge empfängt, d. h. der Empfänger der aufgrund von Bauteil- oder Fertigungstoleranzen am schlechtesten bezüglich der Sender ausgerichtet ist.

Bei einem Lichtgitter, welches nur eine Sendereinheit und eine Empfängereinheit aufweist, verlaufen die Sendelichtstrahlen in einer Ebene, welche den Überwachungsbereich definiert, innerhalb dessen Objekte erfassbar sind.

In einer vorteilhaften Weiterbildung der Erfindung weist das Lichtgitter zusätzlich eine oder mehrere Säulen mit Umlenkspiegeln auf, die zwischen der Sendereinheit und der Empfängereinheit platzierbar sind. Durch die Umlenkung der Sendelichtstrahlen an den Umlenkspiegeln der Säulen kann ein in mehreren Ebenen verlaufender Überwachungsbereich erzeugt werden.

Bei derartigen Lichtgittern müssen vor der Inbetriebnahme zusätzlich die Säulen mit den Umlenkspiegeln justiert werden.

Erfindungsgemäß erfolgt eine Justierung wiederum in Form eines Vorwärtsabgleichs. Bei unveränderter Position der Sendereinheit wird zunächst die im Strahlengang der Sendelichtstrahlen folgende nächstliegende Säule ausgerichtet. Hierzu sind an der Säule im Bereich des oder der Umlenkspiegel Zielmarken vorgesehen, auf welche die sichtbaren Richtstrahlen ausgerichtet werden.

Dabei werden die Zielmarken nur während des Justiervorganges auf die jeweiligen Säulen aufgebracht. Nach erfolgter Justierung werden die Zielmarken wieder von den Säulen entfernt. Vorzugsweise sind hierzu die Zielmarken auf Schablonen oder dergleichen aufgebracht, welche in vorgegebenen Sollpositionen an der Säule im Bereich der Umlenkspiegel lösbar befestigt werden.

Nach dem Ausrichten der ersten Säule werden, falls vorgesehen, die in Strahlrichtung der Sendelichtstrahlen bzw. Richtstrahlen folgenden weiteren Säulen in gleicher Weise justiert. Nachdem alle Säulen des Lichtgitters ausgerichtet wurden, wird schließlich die Empfängereinheit justiert.

Ein wesentlicher Vorteil dieses Vorwärtsabgleichs besteht darin, dass die Justierung einer von einer Säule oder der Empfängereinheit gebildeten Optikeinheit lokal durch Ausrichten dieser Einheit, d. h. ohne Verstellen weiterer Einheiten erfolgt. Dabei erfolgt die Ausrichtung der Einheiten in deren Reihenfolge in Strahlrichtung der Sendelichtstrahlen, wobei die im Strahlengang der Sendelichtstrahlen zugeordneten, bereits ausgerichteten Einheiten feste Bezugsgrößen bilden, bezüglich derer die Ausrichtung erfolgt. Mit dem so durchgeführten Vorwärtsabgleich können auch komplexe Lichtgitteranordnungen schnell und präzise ausgerichtet werden.

Die Erfindung wir im Nachstehenden anhand der Zeichnungen erläutert. Es zeigen:
- Figur 1:: Schematische Darstellung eines ersten Ausführungsbeispiels eines Lichtgitters mit einer Sendereinheit und einer Empfängereinheit.
- Figur 2:: Schematische Darstellung eines zweiten Ausführungsbeispiels eines Lichtgitters mit einer Sendereinheit, einer Empfängereinheit und zwei Umlenkspiegeln aufweisenden Säulen.
- Figur 3:: Teildarstellung der Anordnung gemäß Figur 2 mit der Sendereinheit und der ersten Säule.
- Figur 4:: Teildarstellung der Anordnung gemäß Figur 2 mit der Empfängereinheit und der zweiten Säule.

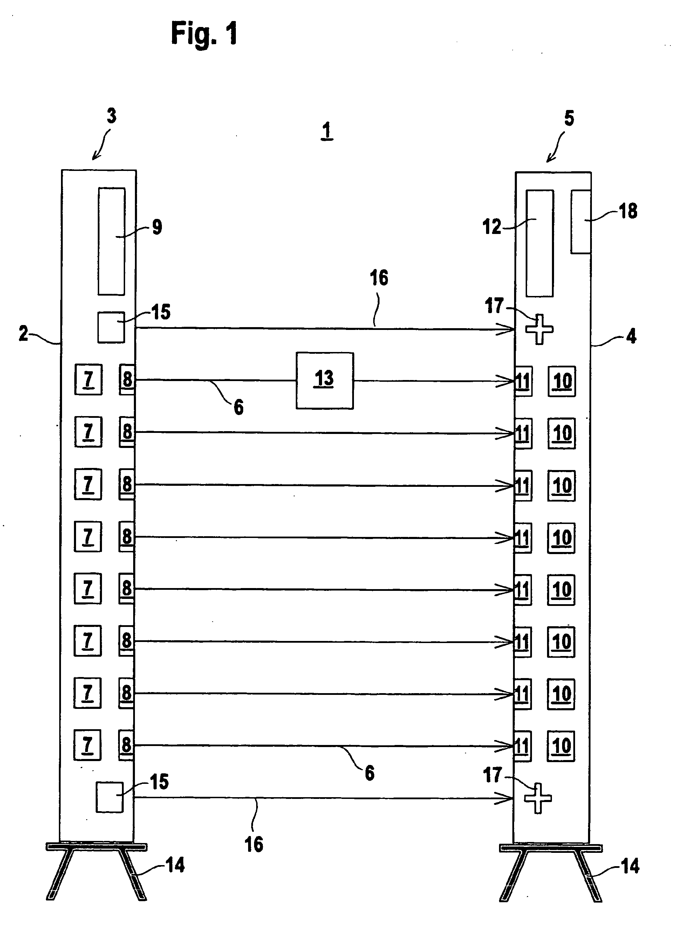

Figur 1 zeigt den Aufbau eines ersten Ausführungsbeispiels eines Lichtgitters 1 zur Überwachung eines Überwachungsbereichs. Das Lichtgitter 1 weist eine in einem ersten Gehäuse 2 integrierte Sendereinheit 3 und eine in einem zweiten Gehäuse 4 integrierte Empfängereinheit 5 auf.

Die Sendereinheit 3 weist eine Anordnung von Sendelichtstrahlen 6 emittierenden Sendern 7 auf. Die Sender 7 bestehen vorzugsweise aus identisch ausgebildeten Leuchtdioden und sind in Abstand nebeneinander liegend angeordnet, wobei die Sender 7 vorzugsweise äquidistant angeordnet sind. Zur Strahlformung der Sendelichtstrahlen 6 ist jedem Sender 7 eine Sendeoptik 8 vorgeordnet. Die Sendeoptiken 8 sind im Bereich der Frontwand des Gehäuses 2 hinter einem nicht separat dargestellten Austrittsfenster angeordnet. Im vorliegenden Fall emittieren die Sender 7 Sendelichtstrahlen 6 im Infrarotbereich.

Die optischen Achsen der im Überwachungsbereich geführten Sendelichtstrahlen 6 verlaufen parallel zueinander in der Ebene des Überwachungsbereichs.

Die Sender 7 werden von einer Sender-Steuereinheit 9 angesteuert. Im vorliegenden Ausführungsbeispiel werden die Sender 7 im Pulsbetrieb betrieben. Die Sender 7 emittieren somit Sendelichtimpulse mit einem vorgegebenen PulsPausen-Verhältnis. Die einzelnen Sender 7 emittieren zyklisch nacheinander Sendelichtimpulse, wobei die Taktung über die Sender-Steuereinheit 9 erfolgt. Dabei werden innerhalb eines Abtastzyklus die Sender 7 entsprechend ihrer Reihenfolge in der Sendereinheit 3 in einer vorgegebenen Scanrichtung nacheinander aktiviert. Die Sendelichtimpulse des ersten Senders 7 dienen zur Synchronisation des Lichtgitters 1.

Die Empfängereinheit 5 weist eine Anordnung von identisch ausgebildeten, nebeneinander liegend angeordneten Empfängern 10 auf. Die Empfänger 10 bestehen vorzugsweise jeweils aus einer Fotodiode und sind äquidistant angeordnet. Jedem Empfänger 10 ist eine Empfangsoptik 11 vorgeordnet. Dabei liegt jeweils ein Empfänger 10 einem Sender 7 der Sendereinheit 3 gegenüber. Die Strahlformung der Sendelichtstrahlen 6 ist im vorliegenden Fall derart gewählt, dass bei freiem Strahlengang die Sendelichtstrahlen 6 eines Sender 7 jeweils nur auf den gegenüberliegend angeordneten Empfänger 10 treffen. Jeder Sender 7 und der diesem zugeordnete Empfänger 10 bildet eine Strahlachse des Lichtgitters 1.

Die Empfänger 10 werden über eine Empfänger-Steuereinheit 12 gesteuert. Die am Ausgang der Empfänger 10 anstehenden Empfangssignale werden in einer Auswerteeinheit, die Bestandteil der Empfänger-Steuereinheit 12 ist, ausgewertet. Bei freiem Strahlengang des Lichtgitters 1 treffen die Sendelichtstrahlen 6 ungehindert auf die zugeordneten Empfänger 10 und generieren dort einem freien Strahlengang entsprechende Referenz-Empfangssignale. Insbesondere erfolgt die Bewertung der Empfangssignale in der Auswerteeinheit mit einem Schwellwert, wobei die Amplituden der Referenz-Empfangssignale oberhalb des Schwellwerts liegen.

Dringt ein Objekt 13 in den Überwachungsbereich ein, so wird der Strahlengang der Sendelichtstrahlen 6 wenigstens eines Sender 7 unterbrochen. Das Empfangssignal des zugeordneten Empfängers 10 liegt dann unterhalb des Schwellwerts, das heißt an diesem Empfänger 10 werden keine Referenz-Empfangssignale registriert.

Die Unterbrechungen der Strahlachsen werden in der Auswerteeinheit zur Generierung eines Objektfeststellungssignals ausgewertet. Das Objektfeststellungssignal ist als binäres Schaltsignal ausgebildet, welches die Schaltabstände "0" und "1" aufweist. Der Schaltzustand "0" entspricht einem freien Strahlengang des Lichtgitters 1, d.h. in der Steuereinheit wurde kein Objekt 13 registriert. Der Schaltzustand "1" entspricht einem Objekteingriff in den Strahlengang des Lichtgitters 1. Vorzugsweise reicht bereits die Unterbrechung einer Strahlachse aus, damit ein Objekteingriff gegeben ist. Durch die Generierung eines derartigen Objektfeststellungssignals wird ein Abschaltbefehl zum Abschalten einer Maschine oder Anlage generiert, deren Vorfeld mit dem Lichtgitter 1 überwacht wird.

Das Lichtgitter 1 ist als Personenschutzeinrichtung einsetzbar, die verhindert dass sich Personen während des Betriebs der Maschine in deren Vorfeld aufhalten.

Vor Inbetriebnahme des Lichtgitter 1 wird dieses justiert, so dass die von den Sendern 7 emittierten Sendelichtstrahlen 6 genau auf die zugeordneten Empfänger 10 ausgerichtet sind.

Wie aus Figur 1 ersichtlich sind die Sendereinheit 3 und die Empfängereinheit 5 auf jeweils einem Sockel 14 positionsverstellbar gelagert. Insbesondere kann durch Verstellen eines Sockels 14 eine Einstellung von Neigungs- und Drehpositionen erfolgen.

Zur Ausrichtung der Empfängereinheit 5 auf die Sendereinheit 3 sind im vorliegenden Fall zwei Sendeelemente 15 vorgesehen, welche Richtstrahlen 16 im sichtbaren Spektralbereich emittieren. Die Sendeelemente 15 bestehen im vorliegenden Fall aus Laserdioden, welchen gegebenenfalls eine nicht dargestellte Optik zur Strahlformung der Richtstrahlen 16 nachgeordnet ist. Die Sendeelemente 15 sind ebenso wie die Sender 7 ortsfest im Gehäuse 4 der Sendereinheit 3 angeordnet. Im vorliegenden Fall ist das erste Sendeelement 15 dem ersten Sender 7 vorgeordnet und das zweite Sendeelement 15 dem letzten Sender 7 in der Sendereinheit 3 nachgeordnet. Die von den Sendeelementen 15 emittierten Richtstrahlen 16 verlaufen somit in Abstand parallel zueinander und zudem parallel zu den von den Sendern 7 emittierten Sendelichtstrahlen 6.

Zur Justierung des Lichtgitters 1 werden die sichtbaren Richtstrahlen 16 jeweils auf eine Zielmarke 17 an der Empfängereinheit 5 ausgerichtet. Im vorliegenden Fall bestehen die Zielmarken 17 aus einer Markierung wie zum Beispiel einem Kreuz, welches auf der Frontseite des Gehäuses 4, vorzugsweise auf dem Fenster, durch welches die Sendelichtstrahlen 6 geführt sind, aufgebracht ist.

Alternativ können Zielmarken 17, 17' auch reversibel auf die Empfängereinheit 5 aufgebracht werden. Weiterhin können die Zielmarken 17, 17' durch Referenzempfänger ersetzt werden, wobei als Maß für die Güte der Ausrichtung der Richtstrahlen 16 die auf den Referenzempfängem auftreffende Lichtmenge ausgewertet wird.

Weiterhin ist zur Justierung des Lichtgitters 1 eine an die Auswerteeinheit angeschlossene Anzeigeeinheit 18 vorgesehen. Mittels der Anzeigeeinheit 18 ist die Lichtmenge der auf einen der Empfänger 10 auftreffenden Sendelichtstrahlen 6 anzeigbar. Im vorliegenden Fall erfolgt während des Justiervorganges in der Auswerteeinheit eine Vorauswertung, bei welcher der Empfänger 10 bestimmt wird, auf welchen die geringste Lichtmenge auftrifft. Dann wird das Empfangssignal dieses Empfängers 10 mit einem vorgegebenen Schwellwert bewertet, wodurch ein binäres Steuersignal zur Ansteuerung der Anzeigeeinheit 18 generiert wird. Die Anzeigeeinheit 18 ist entsprechend als binärer Signalgeber ausgebildet, wobei dieser beispielsweise eine grüne und eine rote Leuchtdiode aufweist. Falls auf den ausgewählten Empfänger 10 eine große Lichtmenge auftrifft, so dass das Empfangssignal dieses Empfängers 10 oberhalb des Schwellwerts liegt, wird nur die grüne Leuchtdiode der Anzeigeeinheit 18 aktiviert. Liegt dagegen das Empfangssignal unterhalb des Schwellwerts wird nur die rote Leuchtdiode der Anzeigeeinheit 18 aktiviert.

Zur Justierung des Lichtgitters 1 wird durch Positionsverstellung des empfangsseitigen Sockels 14 die Position der Empfängereinheit 5 verstellt, bis die Richtstrahlen 16 auf die zugeordneten Zielmarken 17, 17'ausgerichtet sind.

Bei der so ausgerichteten Empfängereinheit 5 können die optischen Achsen der Empfänger 10 bezüglich der optischen Achsen der Sender 7 noch etwas verdreht sein. Zur Ausrichtung der optischen Achsen der Empfänger 10 wird daher anschließend die Empfängereinheit 5 auf dem Sockel 14 um ihre Längsachse gedreht, bis die grüne Leuchtdiode der Anzeigeeinheit 18 leuchtet.

Nach dem so erfolgten Ausrichtvorgang kann das Lichtgitter 1 in Betrieb genommen werden.

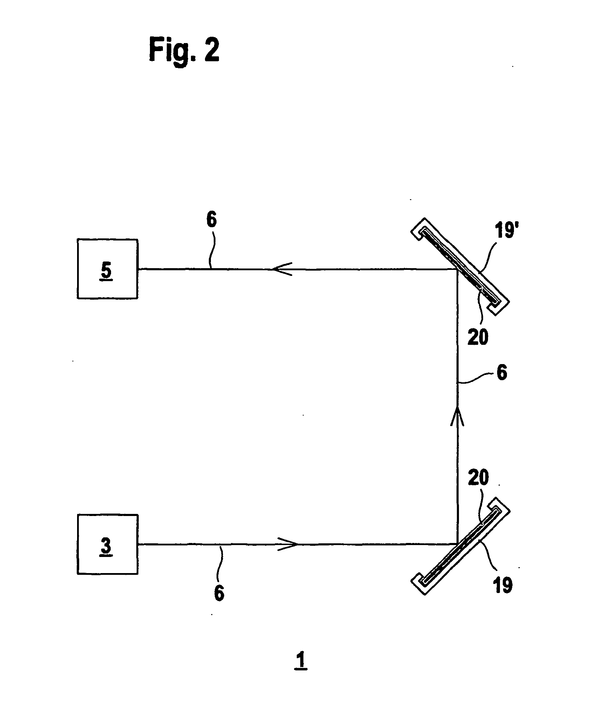

Die Figuren 2-4 zeigen ein weiteres Ausführungsbeispiel eines Lichtgitters 1. Dieses Lichtgitter 1 weist analog zu dem Ausführungsbeispiel gemäß Figur 1 eine Sendereinheit 3 und eine Empfängereinheit 5 auf. Der Aufbau dieser Einheiten entspricht im Wesentlichen der Ausführungsform gemäß Figur 1. Dabei sind entsprechende Bauteile in den Figuren 1-4 mit denselben Bezugszeichen bezeichnet.

Das Lichtgitter 1 gemäß den Figuren 2-4 weist im Unterschied zu der Ausführungsform gemäß Figur 1 nur zwei Strahlachsen auf, wobei die Sendelichtstrahlen 6 über in zwei Säulen 19, 19' angeordnete Umlenkspiegel 20 abgelenkt werden, so dass der Überwachungsbereich in drei senkrecht verlaufenden Ebenen verläuft. Die Säulen 19, 19' sind wie die Sendereinheit 3 und die Empfängereinheit 5 auf einem Sockel 14 positionsverstellbar gelagert.

Figur 2 zeigt den Strahlverlauf des in Betrieb genommenen, justierten Lichtgitters 1. Die von den Sendern 7 der Sendereinheit 3 emittierten Sendelichtstrahlen 6 werden zunächst an der ersten Säule 19 um 90° abgelenkt und dann an der zweiten Säule 19' nochmals um 90° abgelenkt, bevor sie auf die Empfänger 10 der Empfängereinheit 5 geführt sind.

Zur Justierung des Lichtgitter 1 sind analog zu dem Ausführungsbeispiel gemäß Figur 1 zwei Sendeelemente 15 in der Sendereinheit 3 ortsfest angeordnet, welche sichtbare Richtstahlen 16 emittieren. Jedem Richtstahl 16 ist wiederum eine Zielmarke 17 auf der Empfängereinheit 5 zugeordnet. In Übereinstimmung mit der Ausfiihrungsform gemäß Figur 1 ist zur Einstellung der Drehposition der Empfängereinheit 5 an dieser eine Anzeigeeinheit 18 vorgesehen.

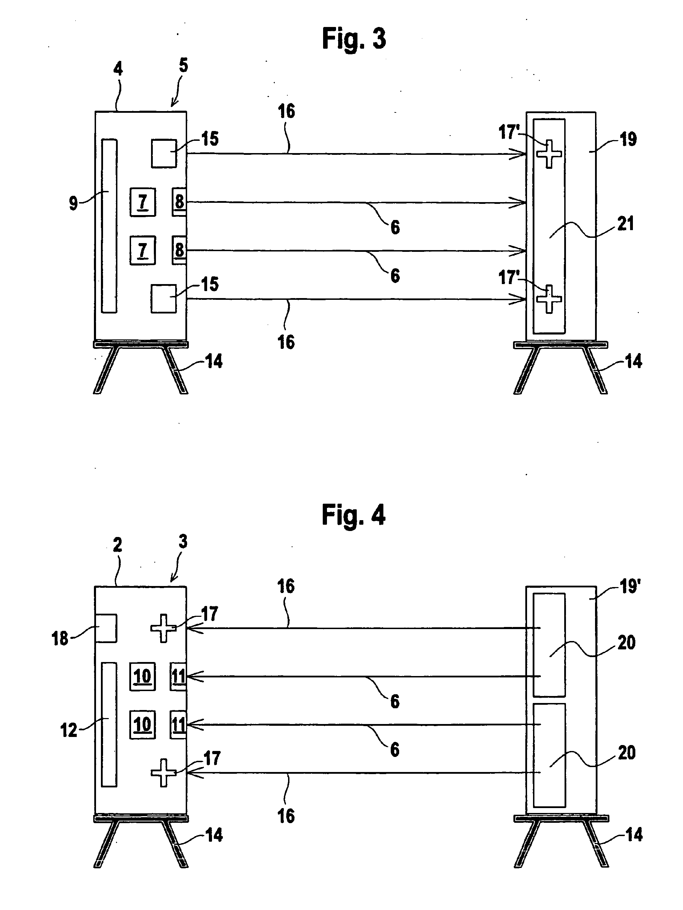

Wie aus den Figuren 3 und 4 ersichtlich, weist jede Säule 19, 19' zwei übereinander liegende, identisch ausgebildete Umlenkspiegel 20 auf, die in Aufnahmen im Gehäuseteil der jeweiligen Säule 19, 19' gelagert sind. Die Aufnahmen sind insbesondere in Form von Nuten ausgebildet, in welchen die Umlenkspiegel 20 in fest vorgegebenen Positionen angeordnet sind. Im vorliegenden Fall liegen die Spiegelflächen der Umlenkspiegel 20 in einer gemeinsamen Spiegelebene. Über jeden Umlenkspiegel 20 sind jeweils die von einem Sendeelement 15 emittierten Richtstrahlen 16 und die von einem Sender 7 emittierten Sendelichtstrahlen 6 geführt.

Zur Justierung einer Säule 19, 19' wird auf jedem Umlenkspiegel 20 dieser Säule 19, 19' eine Schablone 21 aufgesetzt, auf welche zwei Zielmarken 17' aufgebracht sind. Die Zielmarken 17' auf den Schablonen 21 sind zweckmäßigerweise identisch mit den Zielmarken 17 auf der Empfängereinheit 5 ausgebildet. Die Schablonen 21 bestehen aus Kunststoff oder dergleichen und werden bevorzugt durch Einführen in die Aufnahmen für die Umlenkspiegel 20 fixiert. Dabei ist eine Schablone 21 vorzugsweise so ausgebildet, dass diese vollständig beide Umlenkspiegel 20 abdeckt.

Damit kann diese exakt vor den Umlenkspiegeln 20 positioniert werden, so dass die Zielmarken 17', 17' auf der Schablone 21 in vorgegebenen Sollpositionen liegen.

Die Justierung der von den Säulen 19, 19' und der Empfängereinheit 5 gebildeten Optikeinheiten erfolgt einzeln nacheinander in ihrer Reihenfolge im Strahlengang der Sendelichtstrahlen 6 bzw. der Richtstrahlen 16.

Dementsprechend wird zunächst die auf die Sendereinheit 3 folgende Säule 19 justiert. Hierzu wird auf die Umlenkspiegel 20 dieser Säule 19 die Schablone 21 mit den Zielmarken 17' aufgesetzt. Dann wird durch eine Verstellung des Sockels 14 die Position der Säule 19 bei feststehender Sendereinheit 3 verändert, bis die von den Sendeelementen 15 emittierten Richtstrahlen 16 wie in Figur 3 dargestellt auf die Zielmarken 17, 17' der Säule 19 treffen.

Nach der so erfolgten Justierung der ersten Säule 19 wird von dieser die Schablone 21 abgenommen. Zudem wird auf die zweite Säule 19' die Schablone 21 mit den Zielmarken17', 17' aufgebracht. Daraufhin erfolgt die Justierung der zweiten Säule 19' bei vorgegebenen Positionen der Sendereinheit 3 und der ersten Säule 19. Dabei werden die Richtstrahlen 16 über die Umlenkspiegel 20 der ersten Säule 19 zur zweiten Säule 19' geführt. Durch Verstellen des Sockels 14 der zweiten Säule 19' wird deren Position so lange verändert, bis die Richtstrahlen 16 auf die Zielmarken 17', 17' der zweiten Säule 19' treffen.

Nachdem die zweite Säule 19' auf diese Weise justiert worden ist, wird die Schablone 21 von der zweiten Säule 19' abgenommen, worauf mit der Ausrichtung der Empfängereinheit 5 bei festen Positionen der Sendereinheit 3 und der Säulen 19, 19' begonnen wird.

Die Richtstrahlen 16 werden dabei an den Umlenkspiegeln 20 beider Säulen 19, 19' umgelenkt und wie in Figur 4 dargestellt von den Umlenkspiegeln 20 der zweiten Säule 19' auf die Empfängereinheit 5 geführt. Die Justierung der Empfängereinheit 5 erfolgt dabei analog zu dem Ausführungsbeispiel gemäß Figur 1.

Nach erfolgter Ausrichtung der Empfängereinheit 5 ist das gesamte Lichtgitter 1 justiert, so dass dieses in Betrieb genommen werden kann.

### Bezugszeichenliste

- (1): Lichtgitter
- (2): Gehäuse
- (3): Sendereinheit
- (4): Gehäuse
- (5): Empfängereinheit
- (6): Sendelichtstrahlen
- (7): Sender
- (8): Sendeoptik
- (9): Sender-Steuereinheit
- (10): Empfänger
- (11): Empfangsoptik
- (12): Empfänger-Steuereinheit
- (13): Objekt
- (14): Sockel
- (15): Sendeelement
- (16): Richtstrahlen
- (17): Zielmarke
- (17'): Zielmarke
- (18): Anzeigeeinheit
- (19): Säule
- (19'): Säule
- (20): Umlenkspiegel
- (21): Schablone

## Patentansprüche

1. Lichtgitter (1) mit einer eine vorgegebene Anzahl von Sendelichtstrahlen (6) emittierenden Sendern (7) aufweisenden Sendereinheit (3) und einer eine vorgegebene Anzahl von Empfängern (10) aufweisenden Empfängereinheit (5), wobei die Sender (7) und Empfänger (10) jeweils Strahlachsen definierende Paare bilden, sodass bei freiem Strahlengang die von einem Sender (7) emittierten Sendelichtstrahlen (6) auf den zugeordneten Empfänger (10) treffen, und wobei bei einer durch einen Objekteingriff bedingten Unterbrechung wenigstens einer Strahlachse ein Objektfeststellungssignal generierbar ist, **dadurch gekennzeichnet, dass** zur Justierung der Strahlachsen wenigstens zwei sichtbare Richtstrahlen (16) emittierende Sendeelemente (15) vorgesehen sind, wobei alle Sendeelemente (15) in der Sendereinheit (3) integriert sind und dort in vorgegebenen Sollpositionen relativ zu den Sendern (7) angeordnet sind, wobei die Richtstrahlen (16) jeweils auf eine Zielmarke (17) an der Empfängereinheit (5) ausrichtbar sind.

2. Lichtgitter nach Anspruch 1, **dadurch gekennzeichnet, dass** an der Empfängereinheit (5) wenigstens eine Anzeigeeinheit (18) vorgesehen ist, mittels derer die auf wenigstens einen Empfänger (10) auftreffende Lichtmenge der Sendelichtstrahlen (6) anzeigbar ist.

3. Lichtgitter nach Anspruch 2, **dadurch gekennzeichnet, dass** die Anzeigeeinheit (18) als binärer Signalgeber ausgebildet ist, mittels dessen anzeigbar ist, ob die auf den zugeordneten Empfänger (10) auftreffende Lichtmenge der Sendelichtstrahlen (6) einen vorgegebenen Grenzwert über- oder unterschreitet.

4. Lichtgitter nach einem der Ansprüche 1 bis 3, **dadurch gekennzeichnet, dass** dieses wenigstens eine Säule (19, 19') mit wenigstens einem Umlenkspiegel (20) aufweist, wobei die Sendelichtstrahlen (6) und die Richtstrahlen (16) über den Umlenkspiegel (20) zur Empfängereinheit (5) geführt sind.

5. Lichtgitter nach Anspruch 4, **dadurch gekennzeichnet, dass** auf dem Umlenkspiegel (20) Zielmarken (17') zur Ausrichtung der Richtstrahlen (16) vorgesehen sind.

6. Lichtgitter nach Anspruch 5, **dadurch gekennzeichnet, dass** die Zielmarken (17') auf Schablonen (21) aufgebracht sind, welche auf die Säulen (19, 19') aufsetzbar sind.

7. Lichtgitter nach einem der Ansprüche 4 bis 6, **dadurch gekennzeichnet, dass** die Säule (19, 19') zwei Umlenkspiegel (20) aufweist, wobei über jeden Umlenkspiegel (20) ein Richtstrahl und ein Teil der Sendelichtstrahlen (6) geführt sind.

8. Lichtgitter nach Anspruch 7, **dadurch gekennzeichnet, dass** die Umlenkspiegel (20) identisch ausgebildet sind.

9. Lichtgitter nach Anspruch 8, **dadurch gekennzeichnet, dass** dieses mehrere identisch ausgebildete Säulen (19,19') mit Umlenkspiegeln (20) aufweist.

10. Verfahren zur Justierung eines Lichtgitters gemäß einem der Ansprüche 1 bis 9, **dadurch gekennzeichnet, dass** die Empfängereinheit (5) durch Ausrichten der Richtstrahlen (16) auf die Zielmarken (17, 17') an der Empfängereinheit (5) in eine Justageposition gebracht wird.

11. Verfahren nach Anspruch 10, **dadurch gekennzeichnet, dass** zur Ausrichtung in ihre Sollposition die in der Justageposition positionierte Empfängereinheit (5) um ihre Längsachse gedreht wird, wobei die Sollposition durch die Signalwerte der oder jeder Anzeigeeinheit (18) vorgegeben ist.

12. Verfahren nach Anspruch 11, **dadurch gekennzeichnet, dass** zur Ausrichtung der Empfängereinheit (5) der Empfänger (10) ermittelt wird, auf welchen die geringste Lichtmenge auftrifft, und dass dessen Empfangssignale zur Ansteuerung der Anzeigeeinheit (18) verwendet werden.

13. Verfahren nach einem der Ansprüche 11 oder 12, **dadurch gekennzeichnet, dass** bei einer zwischen der Sendereinheit (3) und der Empfängereinheit (5) angeordneten Säule (19, 19') zunächst die Umlenksäule justiert wird und bei justierter Umlenksäule anschließend die Empfängereinheit (5) justiert wird.

14. Verfahren nach Anspruch 13, **dadurch gekennzeichnet, dass** bei mehreren zwischen der Sendereinheit (3) angeordneten Säulen (19, 19') diese entsprechend ihrer Reihenfolge im Strahlengang der Richtstrahlen (16) nacheinander justiert werden, und dass im Anschluss daran die Empfängereinheit (5) justiert wird.

15. Verfahren nach einem der Ansprüche 13 oder 14, **dadurch gekennzeichnet, dass** zur Justage der oder jeder Säule (19, 19') die Schablonen (21) mit den Zielmarken (17, 17') auf deren Umlenkspiegel (20) aufgesetzt werden.

16. Verfahren nach Anspruch 15, **dadurch gekennzeichnet, dass** zur Ausrichtung einer Säule (19, 19') die Richtstrahlen (16) auf die an der Säule (19, 19') angeordneten Zielmarken (17, 17') ausgerichtet werden.

## Claims

1. Light grating (1) with a transmitter unit (3) having a predetermined number of transmitters (7) emitting transmitted light beams (6) and a receiver unit (5) having a predetermined number of receivers (10), wherein the transmitters (7) and receivers (10) form respective pairs defining beam axes so that with free beam path the transmitted light beams (6) emitted by a transmitter (7) are incident on the associated receiver (10) and wherein an object detection signal can be generated in the case of interruption of at least one beam axis caused by an object intrusion, **characterised in that** at least two transmitting elements (15) emitting visible directional beams (16) are provided for adjustment of the beam axes, wherein all transmitting elements (15) are integrated in the transmitter unit (3) and are arranged there in predetermined target positions relative to the transmitters (7), wherein the directional beams (16) are each alignable with a respective target mark (17) at the receiver unit (5).

2. Light grating according to claim 1, **characterised in that** at least one indicating unit (18) by means of which the amount of light of the transmitted light beams (6) incident on at least one receiver (10) can be indicated is provided at the receiver unit (5).

3. Light grating according to claim 2, **characterised in that** the indicating unit (18) is constructed as a binary signal transmitter by means of which it can be indicated whether the amount of light of the transmitted light beams (6) incident on the associated receiver (10) exceeds or falls below a predetermined limit value.

4. Light grating according to one of claims 1 to 3, **characterised in that** this comprises at least one column (19, 19') with at least one deflecting mirror (20), wherein the transmitted light beams (6) and the directional beams (16) are guided by way of the deflecting mirror (20) to the receiver unit (5).

5. Light grating according to claim 4, **characterised in that** target marks (17') for the alignment of the directional beams (16) are provided on the deflecting mirror (20).

6. Light grating according to claim 5, **characterised in that** the target marks (17') are applied to templates (21) which can be placed on the columns (19, 19').

7. Light grating according to one of claims 4 to 6, **characterised in that** the column (19, 19') has two deflecting mirrors (20), wherein a directional beam and a part of the transmitted light beams (6) are each guided by way of a respective one of the deflecting mirrors (20).

8. Light grating according to claim 7, **characterised in that** the deflecting mirrors (20) are of identical construction.

9. Light grating according to claim 8, **characterised in that** this comprises several identically constructed columns (19, 19') with deflecting mirrors (20).

10. Method of adjusting a light grating according to one of claims 1 to 9, **characterised in that** the receiver unit (5) is brought into an adjusted position by alignment of the directional beams (16) with the target marks (17, 17') at the receiver unit (5).

11. Method according to claim 10, **characterised in that** for alignment in its target position the receiver unit (5) positioned in the adjusted position is rotated about its longitudinal axis, wherein the target position is predetermined by the signal values of the or each indicating unit (18).

12. Method according to claim 11, **characterised in that** for alignment of the receiver unit (5) there is determination of the receiver (10) on which the smallest amount of light is incident and that the received signals thereof are used for control of the indicating unit (18).

13. Method according to one of claims 11 and 12, **characterised in that** in the case of a column (19, 19') arranged between the transmitter unit (3) and the receiver unit (5) initially the deflecting column is adjusted and subsequently the receiver unit (5) is adjusted when the deflecting column is adjusted.

14. Method according to claim 13, **characterised in that** in the case of several columns (19, 19') arranged between the transmitter unit (3) these are adjusted in succession in correspondence with their sequence in the beam path of the directional beams (16) and that subsequently thereto the receiver unit (5) is adjusted.

15. Method according to one of claims 13 and 14, **characterised in that** for adjustment of the or each column (19, 19') the templates (21) with the target marks (17, 17') are placed on the deflecting mirrors (20) thereof.

16. Method according to claim 15, **characterised in that** for alignment of a column (19, 19') the directional beams (16) are aligned with the target marks (17, 17') arranged at the column (19, 19').

## Revendications

1. Barrière optique (1) avec une unité émettrice (3) présentant un nombre prédéfini d'émetteurs (7) émettant des rayons lumineux d'émission (6) et une unité réceptrice (5) présentant un nombre prédéfini de récepteurs (10), les émetteurs (7) et les récepteurs (10) formant chaque fois des paires définissant des axes de faisceau de telle sorte que quand le chemin optique est libre les rayons lumineux d'émission (6) émis par un émetteur (7) arrivent sur le récepteur (10) associé, un signal de détection d'objet pouvant être généré en cas de coupure d'au moins un axe de faisceau causée par l'interposition d'un objet, **caractérisée par le fait qu'**il est prévu au moins deux éléments d'émission (15) émettant des rayons d'alignement (16) visibles pour l'ajustage des axes de faisceau, tous les éléments d'émission (15) étant intégrés dans l'unité émettrice (3) et y étant disposés dans des positions prescrites prédéfinies par rapport aux émetteurs (7), les rayons d'alignement (16) pouvant être alignés chacun sur une marque cible (17) de l'unité réceptrice (5).

2. Barrière optique selon la revendication 1, **caractérisée par le fait qu'**il est prévu sur l'unité réceptrice (5) au moins une unité d'affichage (18) sur laquelle la quantité de lumière des rayons lumineux d'émission (6) arrivant sur au moins un récepteur (10) peut être affichée.

3. Barrière optique selon la revendication 2, **caractérisée par le fait que** l'unité d'affichage (18) est réalisée sous forme de d'émetteur de signaux binaires au moyen duquel il est possible d'indiquer si la quantité de lumière des rayons lumineux d'émission (6) arrivant sur le récepteur (10) associé est supérieure ou inférieure à une valeur limite prédéfinie.

4. Barrière optique selon l'une des revendications 1 à 3, **caractérisée par le fait que** celle-ci présente au moins une colonne (19, 19') avec au moins un miroir de déviation (20), les rayons lumineux d'émission (6) et les rayons d'alignement (16) étant guidés vers l'unité réceptrice (5) par le miroir de déviation (20).

5. Barrière optique selon la revendication 4, **caractérisée par le fait qu'**il est prévu sur le miroir de déviation (20) des marques cibles (17') servant à aligner les rayons d'alignement (16).

6. Barrière optique selon la revendication 5, **caractérisée par le fait que** les marques cibles (17') sont appliquées sur des gabarits (21) qui peuvent être positionnés sur les colonnes (19, 19').

7. Barrière optique selon l'une des revendications 4 à 6, **caractérisée par le fait que** la colonne (19, 19') présente deux miroirs de déviation (20), un rayon d'alignement et une partie des rayons lumineux d'émission (6) étant guidés par chaque miroir de déviation (20).

8. Barrière optique selon la revendication 7, **caractérisée par le fait que** les miroirs de déviation (20) sont identiques.

9. Barrière optique selon la revendication 8, **caractérisée par le fait que** celle-ci présente plusieurs colonnes (19, 19') identiques avec des miroirs de déviation (20).

10. Procédé d'ajustage d'une barrière optique selon l'une des revendications 1 à 9, **caractérisé par le fait que** l'unité réceptrice (5) est amenée dans une position d'ajustage par alignement des rayons d'alignement (16) sur les marques cibles (17, 17') de l'unité réceptrice (5).

11. Procédé selon la revendication 10, **caractérisé par le fait que** pour aligner dans sa position prescrite l'unité réceptrice (5) positionnée dans la position d'ajustage, on la tourne autour de son axe longitudinal, la position prescrite étant donnée par les valeurs de signal de l'unité d'affichage (18) ou de chaque unité d'affichage (18).

12. Procédé selon la revendication 11, **caractérisé par le fait que** pour aligner l'unité réceptrice (5), on détermine le récepteur (10) sur lequel arrive la plus faible quantité de lumière et que l'on utilise ses signaux de réception pour commander l'unité d'affichage (18).

13. Procédé selon l'une des revendications 11 ou 12, **caractérisé par le fait que**, si une colonne (19, 19') est disposée entre l'unité émettrice (3) et l'unité réceptrice (5), on ajuste d'abord la colonne de déviation et, la colonne de déviation étant ajustée, on ajuste ensuite l'unité réceptrice (5).

14. Procédé selon la revendication 13, **caractérisé par le fait que** si plusieurs colonnes (19, 19') sont disposées entre l'unité émettrice (3) et l'unité réceptrice (5), on ajuste celles-ci l'une après l'autre selon leur ordre dans le chemin optique des rayons d'alignement (16) et que l'on ajuste ensuite l'unité réceptrice (5).

15. Procédé selon l'une des revendications 13 ou 14, **caractérisé par le fait que** pour ajuster la ou chaque colonne (19, 19'), on positionne les gabarits (21) avec les marques cibles (17, 17') sur leurs miroirs de déviation (20).

16. Procédé selon la revendication 15, **caractérisé par le fait que** pour aligner une colonne (19, 19'), on aligne les rayons d'alignement (16) sur les marques cibles (17, 17') disposées sur la colonne (19, 19').
